# EUROPÄISCHE PATENTSCHRIFT

(11) **EP 3 038 959 B1**
(45) Veröffentlichungstag und Bekanntmachung des Hinweises auf die Patenterteilung: **22.11.2017**
(21) Anmeldenummer: 14744519.1
(22) Anmeldetag: 24.07.2014
(51) Int. Cl.: B65G 54/02

(54) **TRANSPORTVORRICHTUNG**
TRANSPORTING ARRANGEMENT
DISPOSITIF TRANSPORTEUR

(30) Priorität: 26.08.2013 DE 102013216949; 21.07.2014 DE 102014214107
(43) Veröffentlichungstag der Anmeldung: 06.07.2016
(73) Patentinhaber: Robert Bosch GmbH, 70442 Stuttgart (DE)
(72) Erfinder: WIPF, Alfred, 79798 Jestetten (DE); KATHAN, Philipp, CH-8246 Langwiesen (CH); WANNER, Hansruedi, CH-8214 Gächlingen (CH); SCHWARZ, Daniel, CH-8476 Unterstammheim (CH); HANISCH, Markus, 70736 Fellbach (DE)
(86) Internationale Anmeldenummer: PCT/EP2014/065906
(87) Internationale Veröffentlichungsnummer: WO 2015/028212

(56) Entgegenhaltungen:
- EP-A1- 0 957 051
- EP-A2- 1 714 923
- WO-A1-96/27544
- WO-A1-2010/086060
- WO-A1-2011/131385
- US-B1- 6 876 896
- US-B2- 6 876 107

## Beschreibung

### Stand der Technik

Die vorliegende Erfindung betrifft eine Transportvorrichtung zum Bewegen von Produkten. Die Transportvorrichtung wird insbesondere zum Transport von Produkten und / oder Behältern in Abfüll- oder Verpackungsanlagen verwendet.

Es sind lineare, umlaufende oder kombinierte Transportvorrichtungen bekannt, bei welchen die Transporteinheiten (auch: Mover) auf einem linearen, umlaufenden oder kombinierten Führungssystem beweglich gelagert sind. Die Führungsschiene des Führungssystems bildet dabei eine Bewegungsbahn, auf der mehrere einzelne Transporteinheiten frei beweglich sind. Die Transporteinheiten sind dabei über elektromagnetische Linearantriebe beweglich. Mit diesen Transporteinheiten können Produkte in unterschiedlichsten Formaten einzeln und unabhängig voneinander transportiert werden. Beispielhaften Stand der Technik zeigt US6876107B2. US 6,876,107 B2 zeigt eine Transportvorrichtung nach dem Oberbegriff des Anspruchs 1.

### Offenbarung der Erfindung

Die erfindungsgemäße Transportvorrichtung nach Anspruch 1 ermöglicht bei kostengünstiger Herstellung und einfacher Montage einen sehr wartungsarmen und sicheren Betrieb. Der Aufbau der Transportvorrichtung ist dabei möglichst klein bauend, so dass der Platzbedarf gering ausfällt. Durch die spezielle Anordnung des Führungssystems und der Motorebene entsteht ein kompakter Aufbau und gleichzeitig sind mit den Transporteinheiten sehr enge Radien fahrbar. Diese Vorteile werden erreicht durch die erfindungsgemäße Transportvorrichtung, umfassend zumindest ein Führungssystem mit einer feststehenden Führungsschiene und mehreren Abstützelementen. Die Abstützelemente sind, insbesondere ausgebildet als Rollen und/oder Gleitstücke und/oder Levitationselemente, d.h. frei schwebende Elemente, auf der Führungsschiene geführt. Des Weiteren umfasst die Transportvorrichtung zumindest eine Transporteinheit. Diese Transporteinheit ist mit den Abstützelementen verbunden, so dass die Transporteinheit auf der Führungsschiene geführt ist und in einer Bewegungsrichtung linear beweglich ist. Eine Linearmotor-Antriebsvorrichtung sorgt für den individuell ansteuerbaren Antrieb der Transporteinheit. Hierzu umfasst die Linearmotor-Antriebsvorrichtung eine feststehende Statoreinheit. Die Statoreinheit erstreckt sich mit mehreren Spulen parallel zur Führungsschiene. Des Weiteren umfasst die Linearmotor-Antriebsvorrichtung zumindest ein magnetisches Element auf der Transporteinheit. Dieses magnetische Element ist insbesondere ein Permanentmagnet. Durch entsprechende Ansteuerung der Spulen in der Statoreinheit wirkt eine magnetische Kraft auf diese magnetischen Elemente der Transporteinheit. Dadurch können die Transporteinheiten beschleunigt, abgebremst und/oder im Stillstand positioniert werden. Im Querschnitt betrachtet, ist das Führungssystem seitlich zur Linearmotorantriebsvorrichtung angeordnet. Es ist eine im Wesentlichen vertikale Führungsebene definiert, die zumindest angenähert parallel zur Bewegungsrichtung und durch die Mitte des Führungssystems verläuft. Des Weiteren ist eine im Wesentlichen vertikale Motorebene definiert, die ebenfalls zumindest angenähert parallel zur Bewegungsrichtung ausgerichtet ist und durch die Mitte der Linearmotor-Antriebsvorrichtung verläuft. Ein wesentlicher Anteil der Transporteinheit, als Grundkörper bezeichnet, ist zwischen der Führungsebene und der Motorebene angeordnet. Dieser Grundkörper trägt bevorzugt zumindest die Abstützelemente und mindestens eines der magnetischen Elemente. Des Weiteren kann, wie noch im Detail erläutert wird, ein Teil eines Messsystems an diesem Grundkörper der Transporteinheit angeordnet werden.

Die Unteransprüche zeigen bevorzugte Weiterbildungen der Erfindung.

Bevorzugt ist ein Träger vorgesehen, wobei die Führungsschiene und die Statoreinheit jeweils separat an diesem Träger befestigt, insbesondere angeschraubt, sind. Dadurch stützt sich die Führungsschiene nicht direkt auf der Statoreinheit ab, was sich positiv auf die Genauigkeit des Systems auswirkt. Fertigungstoleranzen des Führungssystems und des Antriebssystems werden nicht addiert und können durch die mögliche Einstellung der Positionen der Bauteile zueinander ausgeglichen werden
Die Abstützelemente liegen an zumindest einem Kontaktpunkt an der Führungsschiene an. Die Führungsebene liegt insbesondere in der Mitte zwischen dem äußersten und dem innersten Kontaktpunkt.

Die Transporteinheit erstreckt sich erfindungsgemäß U-förmig über die Statoreinheit. Dadurch kann beidseitig der Statoreinheit je ein magnetisches Element an der Transporteinheit angeordnet werden. Dadurch ist ein gut funktionierender Linearmotor möglich. Die Mitte der Linearmotor-Antriebsvorrichtung ist somit die Mitte zwischen den beiden magnetischen Elementen bzw. die Mitte der Statoreinheit.

Die Transportvorrichtung umfasst bevorzugt ein Messsystem zur Positionserfassung der Transporteinheit. Das Messsystem funktioniert vorzugsweise berührungslos. Das Messsystem umfasst zumindest ein ortsfestes Messteil. Dieses ortsfeste Messteil ist vorzugsweise an der Statoreinheit angeordnet. Des Weiteren umfasst das Messsystem ein zweites Messteil an der Transporteinheit. Die beiden Messteile korrespondieren miteinander, so dass beim Vorbeifahren der beiden Messteile aneinander die Position der Transporteinheit bestimmt werden kann. Im Stillstand kann die Position der Transporteinheit ebenfalls bestimmt werden.

Gemäß einer ersten Variante befindet sich das zweite Messteil an einer der Motorebene zugewandten Seite des Grundkörpers der Transporteinheit. Insbesondere ist das zweite Messteil eine in den Grundkörper der Transporteinheit eingefräste Kontur.

Gemäß einer zweiten Variante befindet sich das zweite Messteil an einem weiteren Schenkel. Dabei erstreckt sich die Transporteinheit U-förmig über die Statoreinheit, wobei der Grundkörper einen Schenkel bildet, dem auf der anderen Seite der Statoreinheit ein weiterer Schenkel gegenüber liegt. Das zweite Messteil ist vorzugsweise der Motorebene zugewandt. Insbesondere ist das zweite Messteil eine in den weiteren Schenkel der Transporteinheit eingefräste Kontur. Alternativ ist das zweite Messteil direkt oder über ein Zwischenstück am weiteren Schenkel montiert. Dabei ist der weitere Schenkel vorzugsweise kürzer ausgebildet als der Grundkörper. Der weitere Schenkel kommt somit aus dem Einflussbereich des Messsystems und sein Material (elektrisch leitend oder nichtleitend) mit relativ massiver Geometrie beeinflusst das Messverhalten nicht oder nur geringfügig. Dadurch können verbesserte Messresultate erreicht werden, was die Genauigkeit und Bewegungsqualität des Systems positiv beeinflusst.

Vorzugsweise ist zumindest angenähert parallel zur Bewegungsrichtung und durch die Mitte des Messsystems eine im Wesentlichen vertikale Messebene definiert. Diese Messebene liegt vorzugsweise, bezogen auf die Führungsebene, auf derselben Seite wie die Motorebene. Gemäß der ersten Variante liegt die Messebene zwischen der Motorebene und der Führungsebene. Diese sehr zentrale Anordnung des Messsystems ermöglicht eine toleranzarme Messung. Gemäß der zweiten Variante liegt die Motorebene zwischen der Führungsebene und der Messebene.

Die Führungsschiene der Transportvorrichtung bildet vorzugsweise eine kurvige Bahn. Die kurvige Bahn kann endlos, also kreis- oder ringförmig, oder endlich sein. Die kurvige Bahn setzt sich aus zumindest einem Kurvenstück und gegebenenfalls zumindest einem geraden Stück zusammen. Die Kurvenstücke sind durch Radien mit jeweils einem Mittelpunkt bestimmt. Durch jeden Mittelpunkt verläuft eine Neutralachse senkrecht zur Führungsebene.

Die Führungsschiene weist zur Neutralachse (gemessen in der Mitte) hin einen ersten Abstand auf. Das Messsystem (gemessen in der Mitte) weist zur Neutralachse einen zweiten Abstand auf. Das zumindest eine magnetische Element (gemessen in der Mitte) weist zur Neutralachse einen dritten Abstand auf. Die zu vergleichenden Abstände liegen auf einer gemeinsamen Senkrechten zur Bewegungsrichtung. Es wird jeweils der kürzeste Abstand zur nächsten Neutralachse gemessen. Der erste und der zweite Abstand weichen voneinander bevorzugt um maximal 20%, vorzugsweise maximal 15%, ab. Der erste und der dritte Abstand weichen voneinander bevorzugt um maximal 20%, vorzugsweise maximal 15%, ab. Der erste Abstand ist vorzugsweise größer als der zweite Abstand. Der erste Abstand ist vorzugsweise größer als der dritte Abstand. Durch diese geringe Abweichung der Abstände ist eine toleranzarme Messung möglich.

Erfindungsgemäß ist die Transporteinheit, betrachtet in einem senkrecht zur Bewegungsrichtung definierten Querschnitt, asymmetrisch ausgebildet. Diese asymmetrische Ausbildung definiert in erster Linie, dass lediglich auf einer Seite ein Führungssystem ausgebildet ist. Entsprechend gibt es nur eine Führungsschiene.

Die Transporteinheit weist im unbelasteten Zustand einen ersten Massemittelpunkt auf. Beim Transport eines Produktes weist die Transporteinheit einen zweiten Massemittelpunkt auf. Der zweite Massemittelpunkt liegt vorzugsweise näher an der Motorebene als der erste Massemittelpunkt.

Insbesondere umfasst die Transportvorrichtung eine Aufnahme zum Tragen eines Produktes oder einen Mitnehmer zum Schieben eines Produktes. Die Aufnahme bzw. der Mitnehmer liegen vorzugsweise auf einer anderen Seite der Motorebene als die Führungsebene. Durch diese sehr asymmetrische Anordnung entstehen die zwei unterschiedlichen Massemittelpunkte im beladenen und unbeladenen Zustand. Dadurch, dass die Aufnahme oder der Mitnehmer im Wesentlichen auf einer anderen Seite der Motorebene liegen als die Führungsebene, entsteht die Verschiebung des Massemittelpunkts beim Beladen. Die asymmetrische Ausführung ist gegenüber der Symmetrischen deutlich kostengünstiger und hat durch diese Anordnung immer noch den Vorteil, dass sich Beschleunigungen der Transporteinheit im belasteten Zustand im wesentlichen in Richtung der Bewegungsrichtung auswirken und dadurch weniger Verluste und damit auch geringerer Verschleiß auftreten können.

Im senkrecht zur Bewegungsrichtung definierten Querschnitt ist die Transporteinheit vorzugsweise U-förmig ausgebildet, wobei die beiden Schenkel der U-Form vorzugsweise unterschiedlich lang sind. Einer der Schenkel der U-Form bildet dabei den Grundkörper der Transporteinheit. Die beiden Schenkel sind über eine Basis miteinander verbunden. Der oben erwähnte Mitnehmer oder die Aufnahme sind vorzugsweise an der Basis oder an dem, dem Grundkörper gegenüberliegenden Schenkel angeordnet.

Vorzugsweise ist vorgesehen, dass die Abstützelemente und die Führungsschiene V-förmige Kontaktflächen aufweisen. Insbesondere sind die Abstützelemente als Rollen mit V-förmigen Kerben ausgebildet. Dadurch bietet das Führungssystem auch eine seitliche Führung. Die Rollenachsen sind hier bevorzugt parallel zueinander.

Alternativ ist vorgesehen, dass die Rollenachsen der Rollen mit unterschiedlichen Winkeln zur Führungsebene geneigt sind, so dass durch diese geneigte Anordnung der Rollen eine seitliche Führung entsteht.

Die erfindungsgemäße Transportvorrichtung kann sowohl wie hier beschrieben in im Wesentlichen vertikaler Richtung, aber auch in im Wesentlichen horizontaler Anordnung betrieben werden.

Die Erfindung umfasst des Weiteren eine Anordnung mit der Transportvorrichtung, wie sie beschrieben wurde, innerhalb, vor und/oder nach einer Abfüllanlage oder einer Verpackungsanlage. Die Transporteinheiten können dazu benutzt werden, um Produkte, insbesondere Schüttgüter, Stückgüter, Beutel und Behälter der Abfüllanlage oder Verpackungsanlage zuzuführen. Weiter kann die erfindungsgemäße Transportvorrichtung dazu genutzt werden, Werkzeuge zu bewegen, insbesondere Siegelwerkzeuge in Verpackungsanlagen. Insbesondere ist vorgesehen, dass die Abfüll- oder Verpackungsanlage als horizontale Schlauchbeutelmaschine ausgebildet ist.

### Kurze Beschreibung der Zeichnungen

Nachfolgend werden Ausführungsbeispiele der Erfindung unter Bezugnahme auf die begleitende Zeichnung im Detail beschrieben. Dabei zeigen:
- Figur 1: eine erfindungsgemäße Transportvorrichtung gemäß einem ersten Ausführungsbeispiel,
- Figur 2: eine Schnittansicht der erfindungsgemäßen Transportvorrichtung gemäß dem ersten Ausführungsbeispiel,
- Figur 3: eine isometrische Ansicht einer Transporteinheit der erfindungsgemäßen Transportvorrichtung gemäß dem ersten Ausführungsbeispiel,
- Figur 3a: eine isometrische Ansicht einer Transporteinheit der erfindungsgemäßen Transportvorrichtung gemäß einer Variante des ersten Ausführungsbeispiels,
- Figur 4: eine weitere Ansicht der Transporteinheit der erfindungsgemäßen Transportvorrichtung gemäß dem ersten Ausführungsbeispiel,
- Figur 5: eine Detailansicht der erfindungsgemäßen Transportvorrichtung gemäß dem ersten Ausführungsbeispiel,
- Figur 6: eine weitere Detailansicht der erfindungsgemäßen Transportvorrichtung gemäß dem ersten Ausführungsbeispiel,
- Figur 7: die erfindungsgemäße Transportvorrichtung gemäß einem zweiten Ausführungsbeispiel,
- Figur 8: die erfindungsgemäße Transportvorrichtung gemäß einem dritten Ausführungsbeispiel, und
- Figur 9 bis 11: verschiedene Anordnungen, umfassend zumindest eine der erfindungsgemäßen Transportvorrichtungen.

### Ausführungsformen der Erfindung

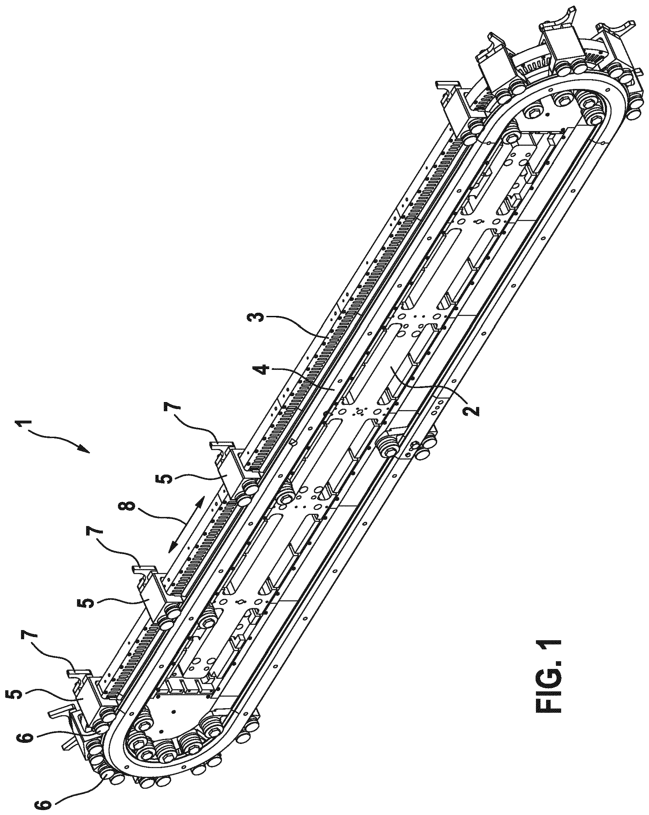

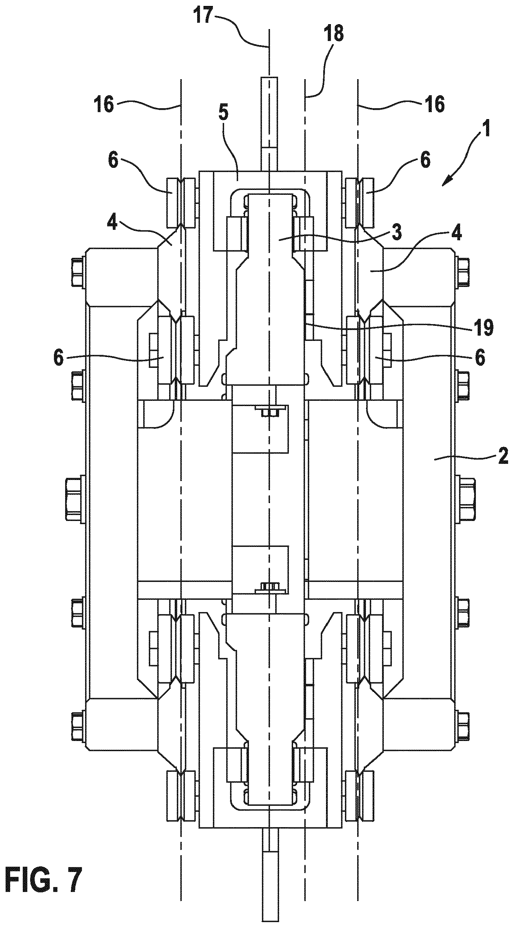

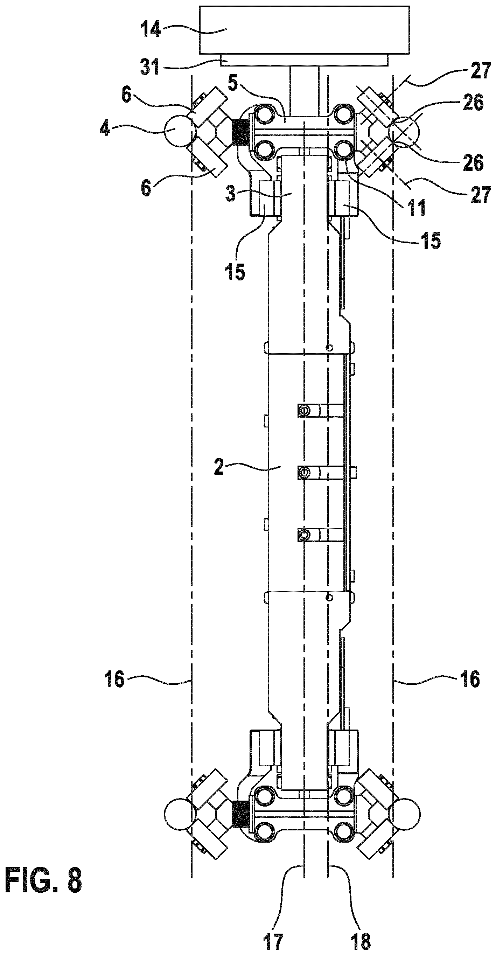

Im Folgenden wird anhand der Figuren 1 bis 6 ein erstes Ausführungsbeispiel einer Transportvorrichtung 1 beschrieben. Figur 7 zeigt ein zweites Ausführungsbeispiel, Figur 8 zeigt ein drittes Ausführungsbeispiel. Gleiche bzw. funktional gleiche Bauteile sind in allen Ausführungsbeispielen mit denselben Bezugszeichen versehen.

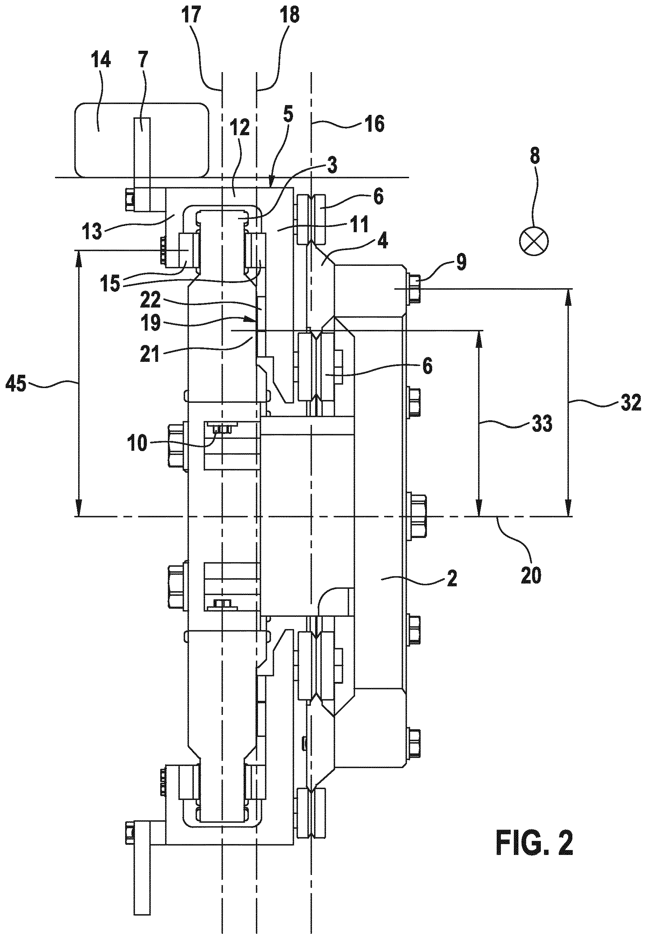

Figur 1 zeigt die Transportvorrichtung 1 in isometrischer Ansicht. Figur 2 zeigt eine Schnittansicht. Die Transportvorrichtung 1 umfasst einen Träger 2. An diesem Träger 2 sind eine Statoreinheit 3 und eine Führungsschiene 4 montiert. Mittels einer ersten Verschraubung 9 ist die Führungsschiene 4 am Träger 2 befestigt. Mittels einer zweiten Verschraubung 10 ist die Statoreinheit 3 am Träger 2 befestigt.

Die Statoreinheit 3 und die Führungsschiene 4 definieren eine ringförmige, endlos umlaufende Bewegungsbahn für mehrere Transporteinheiten 5. Jede Transporteinheit 5 umfasst drei als Rollen ausgebildete Abstützelemente 6. Diese Abstützelemente 6 sind auf der Führungsschiene 4 geführt. Dadurch sind die Transporteinheiten 5 in Bewegungsrichtung 8 linear beweglich.

Jede Transporteinheit 5 umfasst einen Mitnehmer 7. Mit diesem Mitnehmer 7 kann die Transporteinheit 5 ein Produkt 14 (Figur 2) z.B. auf einer Produktauflage schieben.

Jede Transporteinheit 5 weist zwei als Permanentmagneten ausgebildete magnetische Elemente 15 auf. Diese magnetischen Elemente 15 befinden sich beidseitig der Statoreinheit 3. Die Statoreinheit 3 zusammen mit den magnetischen Elementen 15 bildet eine Linearmotor-Antriebsvorrichtung. Über eine entsprechende Ansteuerung der Spulen in der Statoreinheit 3 kann jede Transporteinheit 5 separat und unabhängig voneinander beschleunigt abgebremst und im Stillstand positioniert werden.

Figur 2 zeigt die genaue Ausbildung der Transporteinheit 5. Diese umfasst einen Grundkörper 11, an dem eines der magnetischen Elemente 15 und die drei Abstützelemente 6 befestigt sind. Dem Grundkörper 11 sitzt auf der anderen Seite der Statoreinheit 3 ein weiterer Schenkel 13 der U-förmigen Ausgestaltung der Transporteinheit 5 gegenüber. Dieser weitere Schenkel 13 ist über eine Basis 12 mit dem Grundkörper 11 verbunden. Der Grundkörper 11, die Basis 12 und der weitere Schenkel 13 sind vorzugsweise einstückig gefertigt. Das zweite magnetische Element 15 ist am weiteren Schenkel 13 befestigt. Der Mitnehmer 7 ist ebenfalls am weiteren Schenkel 13 befestigt.

Die Abstützelemente 6 bilden zusammen mit der Führungsschiene 4 ein Führungssystem. Dieses Führungssystem weist eine Führungsebene 16 auf. Die Führungsebene 16 verläuft durch die Mitte (zz) zwischen dem innersten Kontaktpunkt (xx) und dem äußersten Kontaktpunkt (yy) des Führungssystems, ist vertikal ausgerichtet und steht parallel zur Bewegungsrichtung 8.

Durch die Mitte der Linearmotorantriebsvorrichtung, parallel zur Bewegungsrichtung und ebenfalls vertikal, verläuft eine Motorebene 17. Der Grundkörper 11 ist zwischen der Motorebene 17 und der Führungsebene 16 angeordnet.

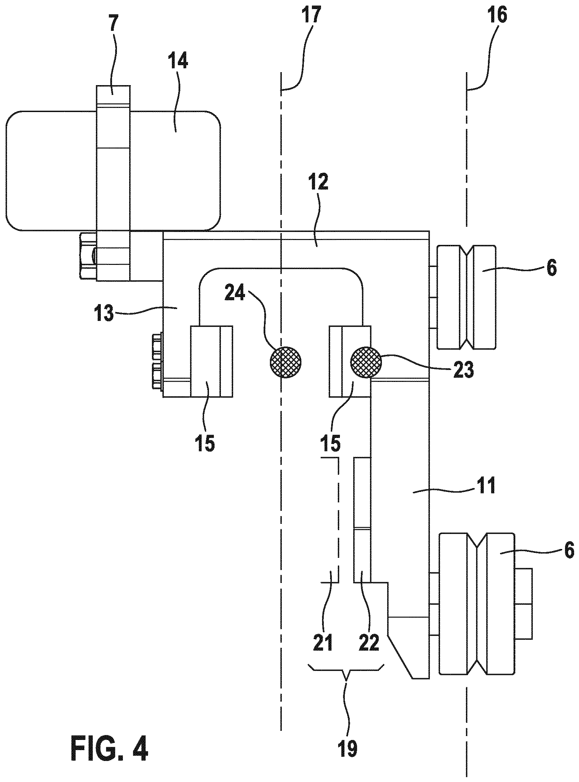

Des Weiteren umfasst die Transportvorrichtung 1 ein Messsystem 19. Das Messsystem 19 umfasst ein ortsfestes erstes Messteil 21 und ein an der Transporteinheit 5 befestigtes zweites Messteil 22 (siehe Figur 4). Durch das Messsystem 19 kann die Position der jeweiligen Transporteinheit 5 berührungslos erfasst werden.

Mittig durch die beiden Messteile 21, 22, parallel zur Bewegungsrichtung 8 und in vertikaler Ausrichtung ist eine Messebene 18 definiert. Diese Messebene 18 liegt vorzugsweise zwischen der Führungsebene 16 und der Motorebene 17.

Figur 2 zeigt des Weiteren eine Neutralachse 20. Die Führungsschiene 4 weist einen ersten Abstand 32 zur Neutralachse 20 auf. Das Messsystem 19 weist einen zweiten Abstand 33 zur Neutralachse 20 auf. Die magnetischen Elemente 15 weisen zur Neutralachse 20 einen dritten Abstand 45 auf. Die beiden Abstände 32, 33 liegen möglichst nahe beieinander, um eine genaue Messung zu erreichen.

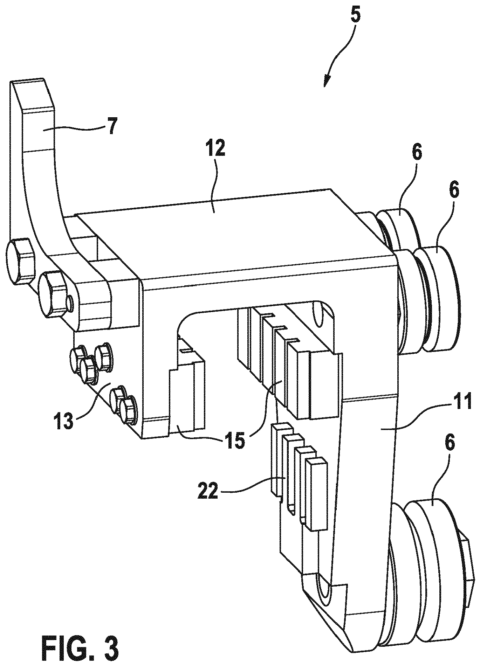

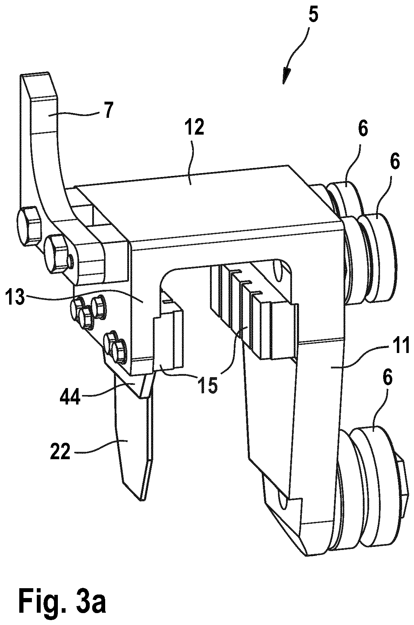

Figur 3 zeigt die Transporteinheit 5 im Detail. Zu sehen ist, dass drei Abstützelemente 6, ausgebildet als Rollen, verwendet werden.

Figur 3a zeigt eine Variante zum ersten Ausführungsbeispiel, bei der das zweite Messteil 22 über ein Zwischenstück 44 am weiteren Schenkel 13 befestigt ist. Die Führungsebene 16 und das Messsystem 19 befinden sich hier auf gegenüberliegenden Seiten der Motorebene 17.

Figur 4 zeigt in Ansicht Vorne eine der Transporteinheiten 5 mit einem Produkt 14. Die Transporteinheiten 5 im ersten Ausführungsbeispiel sind asymmetrisch ausgebildet. Dies bedeutet, dass lediglich auf einer Seite der Motorebene 17 ein Führungssystem vorgesehen ist. Auf der gegenüberliegenden Seite befindet sich der Mitnehmer 7 zum Transport des Produktes 14. Im unbeladenen Zustand, das heißt ohne Produkt 14, weist die Transporteinheit 5 einen ersten Massemittelpunkt 23 auf. Im beladenen Zustand weist die Transporteinheit 5 einen zweiten Massemittelpunkt 24 auf. Die Asymmetrie der Transporteinheit 5 ist so gestaltet, dass der zweite Massemittelpunkt 24 näher an der Motorebene 17 liegt als der erste Massemittelpunkt 23.

Des Weiteren zeigt Figur 4 in gestrichelter Darstellung das erste Messteil 21, das an der Statoreinheit 3 befestigt ist.

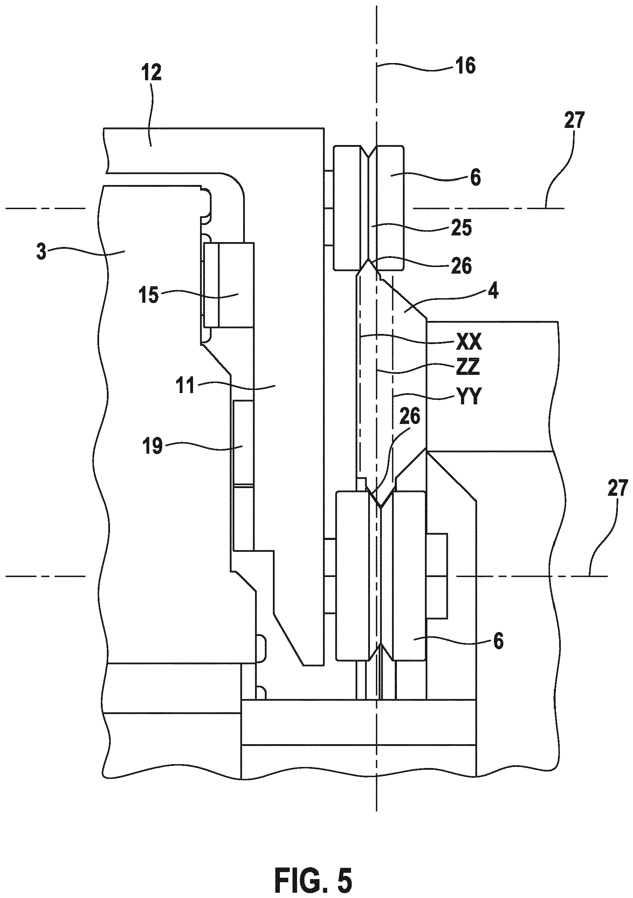

Figur 5 zeigt im Detail die Ausbildung der Abstützelemente 6. Die Abstützelemente 6, ausgebildet als Rollen, und die Führungsschiene 4 weisen jeweils eine V-Form 25 auf. Durch diese V-Form 25 ergibt sich auch eine seitliche Führung der Abstützelemente 6 an der Führungsschiene 4. Die Abstützelemente 6 liegen an Kontaktpunkten 26 an der Führungsschiene 4 an. Durch diese Kontaktpunkte 26 ist die Mitte des Führungssystems und somit die Führungsebene 16 definiert.

Des Weiteren zeigt Figur 5 die Rollenachsen 27 der Abstützelemente 6. Sowohl das Messsystem 19 als auch die magnetischen Elemente 15 befinden sich zwischen den Rollenachsen 27.

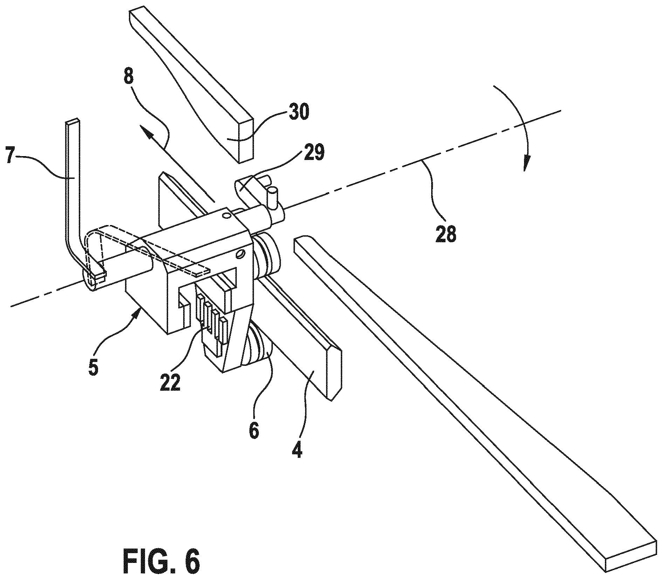

Figur 6 zeigt einige Details der Transportvorrichtung 1. Gemäß Figur 6 ist der Mitnehmer 7 schwenkbar um eine Schwenkachse 28 auf der Transporteinheit 5 angeordnet. Die Schwenkachse 28 erstreckt sich horizontal und senkrecht zur Bewegungsrichtung 8.

Auf der Seite des Führungssystems ist eine Nocke 29 vorgesehen. Über diese Nocke 29 kann der Mitnehmer 7 geschwenkt werden. Ortsfest kann beispielsweise eine Kulisse 30 angeordnet werden. Sobald die Nocke 29 auf die Kulisse 30 aufläuft, kann der Mitnehmer 7 automatisch geschwenkt werden.

Figur 7 zeigt die Transportvorrichtung 1 gemäß dem zweiten Ausführungsbeispiel. Im zweiten Ausführungsbeispiel sind beidseitig der Motorebene 17 jeweils Führungssysteme vorgesehen, so dass es beidseitig der Motorebene 17 je eine Führungsebene 16 gibt. Die Messebene 18 befindet sich weiterhin zwischen der Führungsebene 16 und der Motorebene 17.

Figur 8 zeigt die Transportvorrichtung 1 gemäß dem dritten Ausführungsbeispiel. Im dritten Ausführungsbeispiel sind die Rollenachsen 27 nicht senkrecht zur Führungsebene 16 angeordnet. Durch diese schrägen Rollenachsen 27 ist auch ohne die V-Form 25 eine seitliche Führung möglich. Geraden durch die Kontaktpunkte 26 definieren wiederum die Mitte des Führungssystems und somit die Führungsebene 16.

Die Ausführungsbeispiele zeigen, dass ein wesentlicher Bestandteil der Transporteinheiten 5, nämlich der Grundkörper 11, zwischen die Motorebene 17 und die Führungsebene 16 angeordnet werden kann. Dadurch entsteht eine sehr geringe Bauhöhe und es sind kleine Radien fahrbar. Die Statoreinheit 3 ist auf den Träger 2 direkt montiert. Dieser Träger 2 kann beispielsweise ein Maschinengehäuse darstellen oder ist wiederum am Maschinengehäuse montiert. Die Führungsschiene 4 ist ebenfalls an diesem Träger 2 montiert, dabei aber nicht direkt auf der Statoreinheit 3 abgestützt bzw. verbunden. Die Führungsschiene 4 kann aus mehreren geraden Segmenten oder Kurvensegmenten zusammengesetzt sein oder aus einem einzigen Teil bestehen.

Die Anordnung des Grundkörpers 11 zwischen der Motorebene 17 und der Führungsebene 16 hat des Weiteren den Vorteil, dass der Luftspalt zwischen der Statoreinheit 3 und den magnetischen Elementen 15 sehr gering und konstant ausfällt. Dies erhöht den Wirkungsgrad der Linearmotor-Antriebsvorrichtung.

Das zweite Messteil 22 ist vorzugsweise am Grundkörper 11 ausgebildet. Dies hat den Vorteil, dass durch die Verkleinerung der Toleranzkette der Luftspalt zwischen den beiden Messteilen 21, 22 sehr konstant ist, was sich vorteilhaft auf die Messgenauigkeit und dadurch auf die Genauigkeit und Bewegungsgüte des Systems auswirkt. Besonders vorteilhaft ist das zweite Messteil 22 als eine aus dem Grundkörper ausgefräste Struktur gebildet.

Die beiden Abstände 32, 33 sind vorzugsweise annähernd gleich groß. Vorteilhaft liegen die Messebene 18 und die Motorebene 17 auf derselben Seite bezüglich der Führungsebene 16. Besonders vorteilhaft liegt die Messebene 18 zwischen der Motorebene 17 und der Führungsebene 16. Die Führungsebene 16, die Motorebene 17 und die Messebene 18 sind zumindest annähernd parallel zueinander. Dies hat den Vorteil, dass eine sehr kleine Hebelwirkung der Transporteinheit 5 zum Messsystem 19 vorhanden ist, weil die Lagerung der Transporteinheit 5 annähernd im Bereich des Messsystems 19 erfolgt. Dadurch kann die Messgenauigkeit wesentlich verbessert werden und ergibt in der Folge einen ruhigeren und genaueren Lauf der Linearmotoren.

Der erste Massemittelpunkt 23 im unbelasteten Zustand liegt außerhalb der Motorebene 17, insbesondere im Bereich des magnetischen Elementes 15. Im belasteten Zustand liegt der zweite Massemittelpunkt 24 annähernd in der Motorebene 17. Dies hat den Vorteil, dass kein zusätzliches Moment um die Hochachse bzw. Kräfte quer zur Führungsebene 16 entstehen, was den Verschleiß des Führungssystems minimiert und somit die Standzeit maximiert.

Die Abstützelemente 6 sind vorzugsweise als Rollen ausgebildet. Dabei sind die Rollen vorzugsweise oberhalb und unterhalb der Führungsschiene 4 angeordnet, wobei entweder oben oder unten zwei Rollen angeordnet sind, damit die Transporteinheit 5 zur Bewegungsrichtung 8 gehalten wird und nicht abkippt und eine Kurvenfahrt mit konstanten Verhältnissen trotzdem möglich ist. Das Führungssystem ist vorzugsweise als Führungsschiene 4 mit V-förmiger Kontaktfläche ausgebildet. Die Rollen haben entsprechend eine V-förmige Kerbe, welche mit dieser Kontaktfläche im Eingriff stehen. Dies hat den Vorteil, dass sehr einfach der Freiheitsgrad quer zur Bewegungsrichtung 8 eingeschränkt werden kann.

Die Transporteinheiten 5 können den Mitnehmer 7 aufweisen. Dieser kann auf der von der Führungsebene 16 abgewandten Seite angebracht sein. Dies wirkt sich vorteilhaft auf den Massemittelpunkt der Transporteinheit 5 aus, da dieser dadurch auch im unbelasteten Zustand näher in dem Bereich der Motorebene 17 zu liegen kommt. Der Mitnehmer 7 ist vorzugsweise gesteuert. Dies erfolgt beispielsweise wie anhand von Figur 6 beschrieben. Dies hat den Vorteil, dass vor allem, wenn sich die Transporteinheit 5 mit dem Mitnehmer 7 im Bereich eines Kurvensegmentes befindet, weniger Platz benötigt wird, da hier der Mitnehmer 7 eingeklappt werden kann. Ebenfalls kann der Mitnehmer 7 im achsenlinearen Bereich der Transportvorrichtung 1, welche sich beispielsweise unterhalb einer Produktzuführung befindet, auf die Produkte einzeln hintereinander zugeführt werden, synchronisiert zwischen zwei Produkten ausgefahren werden und somit ein einzelnes Produkt oder eine Produktgruppe übernehmen.

Die beidseitige Verwendung von Führungssystemen hat zum Vorteil, dass wesentlich größere Lasten transportiert werden können, da die Transporteinheit 5 symmetrisch gelagert ist. Dadurch wird die Anzahl der tragenden Elemente vergrößert und ein resultierendes Moment um die Hochachse vermieden.

Das dritte Ausführungsbeispiel zeigt eine Ausbildung der Führungsschiene 5 als Führungsstange. Diese Anordnung wird insbesondere für Kartontransportsysteme verwendet. Hier wird beispielsweise anstatt des Mitnehmers 7 eine Aufnahme 31 für einen Karton verwendet.

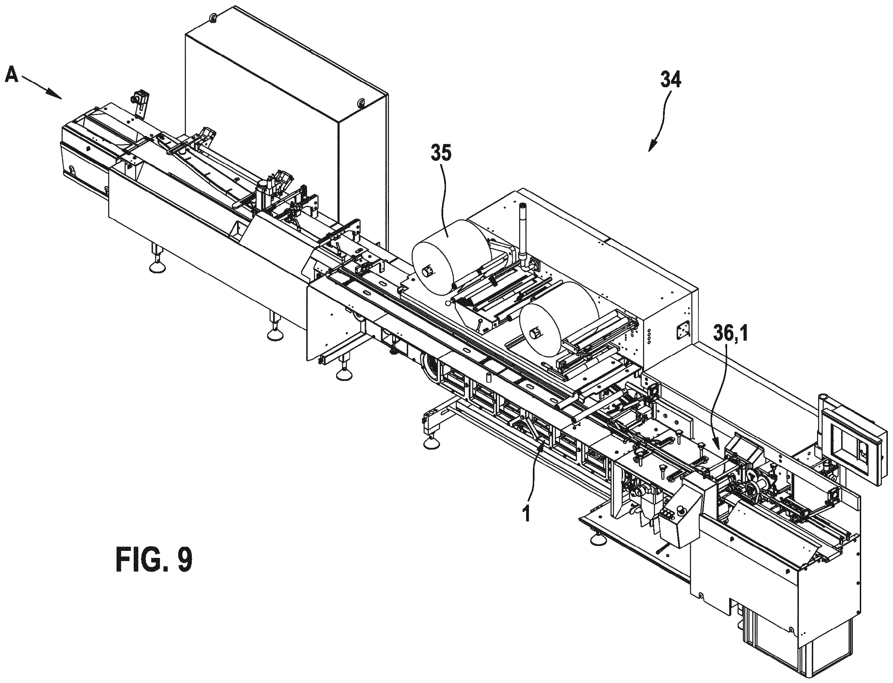

Ein Anwendungsbeispiel für eine Transportvorrichtung 1 ist in Figur 9 anhand einer horizontalen Schlauchbeutelmaschine 34 gezeigt. Der Schlauchbeutelmaschine 34 werden Einzelprodukte bei A zugeführt. Eine Endlosfolie wird von einer Folienrolle 35 abgewickelt und zu einem Schlauch geformt, indem die beiden seitlichen Enden mit der Innenseite der Folie übereinandergelegt und zu einer Längsnaht gesiegelt werden. Eine erfindungsgemäße Transportvorrichtung 1 ist hier als Packguttransport eingesetzt und in einer vertikalen Ebene angeordnet. Auf der oberen Seite werden mittels an der Transporteinheit 5 befestigter Mitnehmer 7 zugeführte Packgüter oder Packgutgruppen mitgenommen und in oben beschriebenen Schlauch übergeführt. Nach der Übergabe werden die Transporteinheiten 5 um eine vertikal angeordnete Kurve auf der unteren Seite wieder zurückgeführt. Dadurch können die einzelnen Packgüter oder Packgutgruppen individuell gesteuert mitgenommen, transportiert und übergeben werden.

Mittels einer Quersiegeleinheit 36 wird der Schlauch in bekannter Weise zwischen den Packgütern oder Packgutgruppen mit einer Quernaht versehen und zu einzelnen Schlauchbeuteln getrennt. Auch für die Steuerung der Quersiegelbacken, welche um eine Umlaufbahn bewegt werden, kann eine Transportvorrichtung 1 eingesetzt werden. An den Transporteinheiten 5 sind entsprechend viele Backen montiert. Dadurch können die einzelnen Siegelbacken individuell gesteuert und zum Beispiel auf die Foliengeschwindigkeit synchronisiert werden.

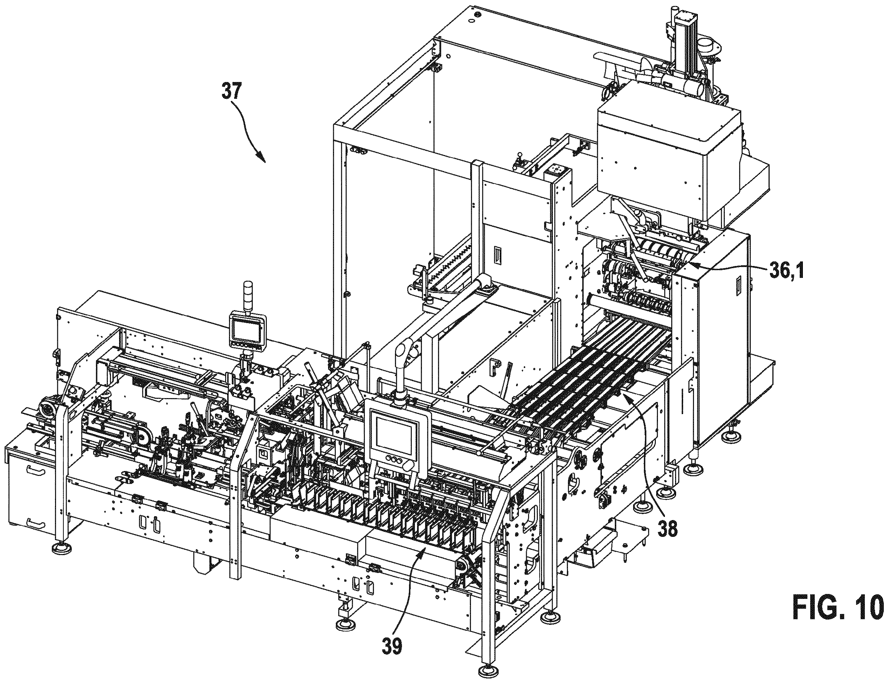

Ein weiteres Anwendungsbeispiel zeigt Figur 10 mit einer vertikalen Schlauchbeutelmaschine 37. Eine Endlosfolie wird längsseitig in mehrere Bahnen geschnitten und jede Bahn zu einem Schlauch geformt, ähnlich wie bei der horizontalen Schlauchbeutelmaschine 34 beschrieben. Mittels der Quersiegeleinheit 36 wird quer zur Folienlaufrichtung eine Siegelnaht erzeugt, welche dem Boden des Beutels entspricht. Nun wird von oben über eine bekannte Dosiereinheit fließfähiges Produkt, wie Pulver, Flüssigkeit oder auch kleinere Stückgüter, in offene Beutel eingefüllt und anschließend durch eine weitere Quernaht verschlossen. Diese weitere Quernaht ist gleichzeitig der Boden des nächsten Beutels. Wie bei der horizontalen Schlauchbeutelmaschine 34 beschrieben, kann eine erfindungsgemäße Transporteinheit 5 zur Steuerung der Quersiegelbacken eingesetzt werden. Die Quersiegelnaht wird geschnitten und damit einzelne Beutel erzeugt. Diese Beutel können mittels einer Transportvorrichtung 38 einer Gruppiereinheit 39 zugeführt werden, in welcher sie gruppiert und jede Gruppe einzeln oder mehrere Gruppen zusammen in Kartons eingeführt werden. Die erfindungsgemäße Transportvorrichtung 1 kann hier als Transport- und/oder Gruppiereinheit eingesetzt werden.

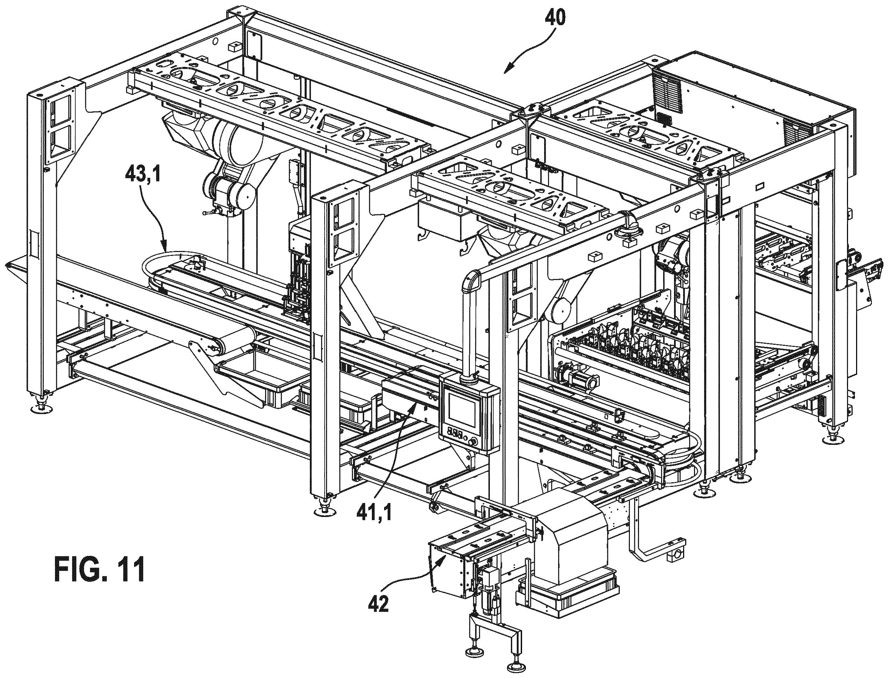

In einem dritten Anwendungsbeispiel gemäß Figur 11 wird eine Transportvorrichtung 1 gemäß Figur 8 benutzt. Hier kommt die Transportvorrichtung 1 in einem Kartonierer 40 zur Anwendung. Kartons werden in bekannter Weise aus einem Flachzuschnitt oder einer Faltschachtel aufgerichtet, befüllt und anschließend verschlossen. Dies kann in einer integrierten Maschine erfolgen, oder in mehreren Maschinen nacheinander. Der Kartontransport 43, der die aufgerichteten Kartonschachteln transportiert, kann nun in einer solchen Transportvorrichtung 1 erfolgen. Dabei kann die Transportvorrichtung 1 auch in einer horizontalen Ebene angeordnet sein und so die Kartons von einer Bearbeitungsstation zu einer anderen transportieren. Die Kurvensegmente sind dabei horizontal angeordnet. Die Produkte 14, welche mittels einer Produktzuführung 42 dem Kartonierer zugeführt werden, werden üblicherweise in einer Gruppiereinheit 41 aufgenommen und gruppiert und mittels eines Roboters gruppenweise in Kartons eingefüllt. Auch diese Gruppiereinheit kann mit einer erfindungsgemäßen Transportvorrichtung 1 ausgeführt sein. Figur 11 zeigt die Transportvorrichtung 1 als Kartontransport 43 in horizontaler Ausrichtung, eine Produktgruppierung 41 und eine Produktzuführung 42.

Die gezeigten Ausführungsbeispiele ermöglichen eine Transportvorrichtung 1, in der enge Kurvenradien möglich sind. Dadurch ermöglichen sich vorteilhafte Schnittstellen zu Prozessfunktionen upstream und downstream (zum Beispiel Packgüter einführen durch Mitnehmer 7 an der Transporteinheit 5 in einen Verpackungsschlauch einer horizontalen Schlauchbeutelmaschine 34, bei geringer Bauhöhe). Des Weiteren braucht der Rundlauf beim Kartontransport in horizontaler Anordnung weniger Platz. Durch geringe Bauform und enge Radien ist der Einsatzbereich der Transportvorrichtung 1 sehr groß.

Durch die seitliche Anordnung des Führungssystems entsteht eine stabile und positionsgenaue Konstruktion. Fertigungstoleranzen wirken sich weniger stark aus, wodurch die Herstellungskosten sinken. Nachträglich ist weniger Justage notwendig. Es entsteht ein qualitativ besserer Lauf der Transporteinheiten 5 durch die genaue Positionierung der magnetischen Elemente 15 zu den Spulen in der Statoreinheit 3 und dem Messsystem 19.

Es sind höhere Leistungen und größere Geschwindigkeiten erreichbar. Dadurch können Kosten eingespart werden, da für gewisse Produktionsleistungen weniger Maschinen eingesetzt werden können. Durch die höhere Laufgüte sinkt der Verschleiß des Führungssystems und die Standzeit des Gesamtsystems erhöht sich. Durch Verschieben des Massemittelpunkts im belasteten Zustand werden Momente und Kräfte, die auf das Führungssystem wirken, minimiert. Dadurch sinkt der Verschleiß des Führungssystems. Durch die höhere Steifigkeit des Systems wird die Eigenfrequenz der Transporteinheiten 5 verschoben. Daraus resultiert eine bessere Laufgüte, weniger Vibrationen und somit weniger Verschleiß und weniger Lärm.

## Patentansprüche

1. Transportvorrichtung (1), umfassend
- zumindest ein Führungssystem mit einer feststehenden Führungsschiene (4) und an der Führungsschiene (4) geführten Abstützelementen (6), insbesondere ausgebildet als Rollen und/oder Gleitstücke,
- zumindest eine in einer Bewegungsrichtung (8) bewegbare Transporteinheit (5), an der die Abstützelemente befestigt sind, wobei die Transporteinheit (5) mittels der Abstützelemente (6) an der Führungsschiene (4) geführt ist,
- eine Linearmotor-Antriebsvorrichtung mit einer feststehenden Statoreinheit (3) und zumindest einem magnetischen Element (15), insbesondere einem Permanentmagneten, an der Transporteinheit (5),
- wobei eine vertikale Führungsebene (16) definiert ist, die parallel zur Bewegungsrichtung (8) und durch die Mitte des Führungssystems verläuft.
- wobei eine vertikale Motorebene (17) definiert ist, die parallel zur Bewegungsrichtung (8) und durch die Mitte der Linearmotor-Antriebsvorrichtung verläuft,
- wobei ein Grundkörper (11) der Transporteinheit (5) zwischen der Führungsebene (16) und der Motorebene (17) angeordnet ist,
- wobei sich die Transporteinheit (5) U-förmig über die Statoreinheit (3) erstreckt, wobei beidseitig der Statoreinheit (3) je ein magnetisches Element (15) an der Transporteinheit (5) angeordnet ist,
- wobei die Transporteinheit (5) in einem senkrecht zur Bewegungsrichtung (8) definierten Querschnitt asymmetrisch ist, **dadurch gekennzeichnet dass** im senkrecht zur Bewegungsrichtung (8) definierten Querschnitt nur auf einer Seite das Führungssystem ausgebildet ist.

2. Transportvorrichtung nach Anspruch 1, **gekennzeichnet durch** einen Träger (2), an dem die Führungsschiene (4) und die Statoreinheit (3) jeweils separat befestigt sind, so dass die Führungsschiene (4) nicht an der Statoreinheit (3) abgestützt ist.

3. Transportvorrichtung nach einem der vorhergehenden Ansprüche, **dadurch gekennzeichnet, dass** die Abstützelemente (6) an zumindest einem Kontaktpunkt (26) an der Führungsschiene (4) anliegen, wobei die Führungsebene in der Mitte zwischen dem äußersten und dem innersten Kontaktpunkt liegt.

4. Transportvorrichtung nach einem der vorhergehenden Ansprüche, **gekennzeichnet durch** ein Messsystem (19) zu Positionserfassung der Transporteinheit (5) mit zumindest einem ortsfesten ersten Messteil (21) und einem zum ersten Messteil (21) korrespondierenden zweiten Messteil (22) an der Transporteinheit (5).

5. Transportvorrichtung nach Anspruch 4, **dadurch gekennzeichnet, dass** das zweite Messteil (22) an einer der Motorebene (17) zugewandten Seite des Grundkörpers (11) der Transporteinheit (5) ausgebildet ist.

6. Transportvorrichtung nach Anspruch 4, **dadurch gekennzeichnet, dass** sich die Transporteinheit (5) U-förmig über die Statoreinheit (3) erstreckt, wobei der Grundkörper (11) einen Schenkel bildet, dem auf der anderen Seite der Statoreinheit (3) ein weiterer Schenkel (13) gegenüber liegt, und wobei das zweite Messteil (22) an dem weiteren Schenkel (13) ausgebildet oder befestigt ist.

7. Transportvorrichtung nach einem der Ansprüche 4 bis 6, **dadurch gekennzeichnet, dass** die Führungsschiene eine kurvige Bahn bildet, wobei die kurvige Bahn sich aus zumindest einem Kurvenstück und gegebenenfalls zumindest einem geraden Stück zusammensetzt, wobei die Kurvenstücke durch Radien mit jeweils einem Mittelpunkt bestimmt sind, wobei durch jeden Mittelpunkt eine Neutralachse senkrecht zur Führungsebene verläuft,
- wobei die Führungsschiene (4) zur Neutralachse (20) einen ersten Abstand (32) aufweist,
- wobei das Messsystem (19) zur Neutralachse (20) einen zweiten Abstand (33) aufweist,
- wobei das zumindest eine magnetische Element (15) zur Neutralachse (20) einen dritten Abstand (45) aufweist,
- wobei der zweite Abstand (33) vom ersten Abstand (32) um maximal 20%, vorzugsweise maximal 15%, abweicht, und
- wobei insbesondere der erste Abstand (32) vom dritten Abstand (45) um maximal 20%, vorzugsweise maximal 15%, abweicht.

8. Transportvorrichtung nach einem der Ansprüche 4 bis 7, **dadurch gekennzeichnet, dass** parallel zur Bewegungsrichtung (8) und durch die Mitte des Messsystems (19) eine vertikale Messebene (18) definiert ist, wobei die Messebene (18) bezogen auf die Führungsebene (16) auf der gleichen Seite wie die Motorebene (17) liegt.

9. Transportvorrichtung nach einem der vorhergehenden Ansprüche, **dadurch gekennzeichnet, dass** die Transporteinheit (5) im unbelasteten Zustand einen ersten Massemittelpunkt (23) aufweist und beim Transport eines Produktes (14) einen zweiten Massemittelpunkt (24) aufweist, wobei der zweite Massemittelpunkt (24) näher an der Motorebene (17) liegt als der erste Massemittelpunkt (23).

10. Transportvorrichtung nach einem der vorhergehenden Ansprüche, **dadurch gekennzeichnet, dass** die Transporteinheit (5) eine Aufnahme (31) zum Tragen eines Produktes (14) oder einen Mitnehmer (7) zum Schieben eines Produktes (14) umfasst, wobei vorzugsweise die Aufnahme (31) bzw. der Mitnehmer (7) und die Führungsebene (16) auf unterschiedlichen Seiten der Motorebene (17) ausgebildet sind.

11. Transportvorrichtung nach einem der vorhergehenden Ansprüche, **dadurch gekennzeichnet, dass** die Transporteinheit (5) in einem senkrecht zur Bewegungsrichtung (8) definierten Querschnitt U-förmig ausgebildet ist, wobei die Schenkel der U-Form unterschiedlich lang sind.

12. Transportvorrichtung nach einem der vorhergehenden Ansprüche, **dadurch gekennzeichnet, dass** die Abstützelemente (6) und die Führungsschiene (4) eine V-förmige Kontaktfläche aufweisen.

13. Anordnung, umfassend eine Transportvorrichtung (1) nach einem der vorhergehenden Ansprüche und eine Abfüllanlage oder eine Verpackungsanlage.

## Claims

1. Transporting apparatus (1) comprising
- at least one guide system having a fixed guide rail (4) and supporting elements (6), in particular designed in the form of rollers and/or sliding components, guided on the guide rail (4),
- at least one transporting unit (5), which can be moved in a movement direction (8) and on which the supporting elements are fastened, wherein the transporting unit (5) is guided on the guide rail (4) by means of the supporting elements (6),
- a linear-motor drive arrangement having a fixed stator unit (3) and at least one magnetic element (15), in particular a permanent magnet, on the transporting unit (5),
- wherein a vertical guide plane (16) is defined, this plane running parallel to the movement direction (8) and through the centre of the guide system,
- wherein a vertical motor plane (17) is defined, this plane running parallel to the movement direction (8) and through the centre of the linear-motor drive arrangement,
- wherein a main body (11) of the transporting unit (5) is arranged between the guide plane (16) and the motor plane (17),
- wherein the transporting unit (5) extends in a U-shaped manner over the stator unit (3), wherein a respective magnetic element (15) is arranged on the transporting unit (5) on either side of the stator unit (3),
- wherein, as seen in a cross section defined perpendicularly to the movement direction (8), the transporting unit (5) is asymmetrical, **characterized in that**, as seen in the cross section defined perpendicularly to the movement direction (8), the guide system is formed only on one side.

2. Transporting apparatus according to Claim 1, **characterized by** a carrier (2), on which the guide rail (4) and the stator unit (3) are fastened separately in each case, the guide rail (4) therefore not being supported on the stator unit (3).

3. Transporting apparatus according to either of the preceding claims, **characterized in that** the supporting elements (6) butt against the guide rail (4) at least at one point of contact (26), wherein the guide plane is located in the centre between the outermost point of contact and the innermost point of contact.

4. Transporting apparatus according to one of the preceding claims, **characterized by** a measuring system (19) for detecting the position of the transporting unit (5), having, on the transporting unit (5), at least one fixed-location, first measuring part (21) and a second measuring part (22), which corresponds with the first measuring part (21).

5. Transporting apparatus according to Claim 4, **characterized in that** the second measuring part (22) is formed on a side of the main body (11) of the transporting unit (5) which is directed towards the motor plane (17).

6. Transporting apparatus according to Claim 4, **characterized in that** the transporting unit (5) extends in a U-shaped manner over the stator unit (3), wherein the main body (11) forms a limb, and a further limb (13) is located opposite said first limb on the other side of the stator unit (3), and wherein the second measuring part (22) is formed, or fastened, on the further limb (13).

7. Transporting apparatus according to one of Claims 4 to 6, **characterized in that** the guide rail forms a curved path, wherein the curved path is made up of at least one curved section and possibly at least one rectilinear section, wherein the curved sections are defined by radii each having a centre point, wherein a neutral axis runs perpendicularly to the guide plane through each centre point,
- wherein the guide rail (4) is spaced apart from the neutral axis (20) by a first distance (32),
- wherein the measuring system (19) is spaced apart from the neutral axis (20) by a second distance (33),
- wherein the at least one magnetic element (15) is spaced apart from the neutral axis (20) by a third distance (45),
- wherein the second distance (33) differs from the first distance (32) by not more than 20%, preferably not more than 15%, and
- wherein in particular the first distance (32) differs from the third distance (45) by not more than 20%, preferably not more than 15%.

8. Transporting apparatus according to one of Claims 4 to 7, **characterized in that** a vertical measuring plane (18) is defined parallel to the movement direction (8) and through the centre of the measuring system (19), wherein, in relation to the guide plane (16), the measuring plane (18) is located on the same side as the motor plane (17).

9. Transporting apparatus according to one of the preceding claims, **characterized in that** the transporting unit (5) has a first centre of mass (23) in the unloaded state and has a second centre of mass (24) when it is transporting a product (14), wherein the second centre of mass (24) is closer to the motor plane (17) than is the first centre of mass (23).

10. Transporting apparatus according to one of the preceding claims, **characterized in that** the transporting unit (5) comprises a holder (31) for carrying a product (14) or comprises a driver (7) for pushing a product (14), wherein preferably the holder (31) or the driver (7) and the guide plane (16) are formed on different sides of the motor plane (17).

11. Transporting apparatus according to one of the preceding claims, **characterized in that**, as seen in a cross section defined perpendicularly to the movement direction (8), the transporting unit (5) is of U-shaped design, wherein the limbs of the U shape are of different lengths.

12. Transporting apparatus according to one of the preceding claims, **characterized in that** the supporting elements (6) and the guide rail (4) have a V-shaped contact surface.

13. Arrangement comprising a transporting apparatus (1) according to one of the preceding claims and also comprising a filling installation or a packaging installation.

## Revendications

1. Dispositif de transport (1), comprenant
- au moins un système de guidage avec un rail de guidage fixe (4) et des éléments d'appui (6) guidés sur le rail de guidage (4), en particulier réalisés sous forme de rouleaux et/ou de pièces coulissantes,
- au moins une unité de transport (5) pouvant être déplacée dans un sens de déplacement (8), sur laquelle sont fixés les éléments d'appui, l'unité de transport (5) étant guidée au moyen des éléments d'appui (6) sur le rail de guidage (4),
- un dispositif d'entraînement à moteur linéaire avec une unité de stator fixe (3) et au moins un élément magnétique (15), en particulier un aimant permanent, sur l'unité de transport (5),
- un plan de guidage vertical (16) étant défini, lequel s'étend parallèlement à la direction de déplacement (8) et à travers le centre du système de guidage,
- un plan de moteur vertical (17) étant défini, lequel s'étend parallèlement à la direction de déplacement (8) et à travers le centre du dispositif d'entraînement à moteur linéaire,
- un corps de base (11) de l'unité de transport (5) étant disposé entre le plan de guidage (16) et le plan de moteur (17),
- l'unité de transport (5) s'étendant en forme de U sur l'unité de stator (3), un élément magnétique (15) étant disposé sur l'unité de transport (5) de chaque côté de l'unité de stator (3),
- l'unité de transport (5), en section transversale définie perpendiculairement à la direction de déplacement (8), étant asymétrique,
**caractérisé en ce que** le système de guidage est réalisé seulement sur un côté dans la section transversale définie perpendiculairement à la direction de déplacement (8).

2. Dispositif de transport selon la revendication 1, **caractérisé par** un support (2) sur lequel le rail de guidage (4) et l'unité de stator (3) sont à chaque fois fixés de manière séparée de telle sorte que le rail de guidage (4) ne soit pas supporté sur l'unité de stator (3).

3. Dispositif de transport selon l'une quelconque des revendications précédentes, **caractérisé en ce que** les éléments d'appui (6) s'appliquent au niveau d'au moins un point de contact (26) sur le rail de guidage (4), le plan de guidage étant situé au centre entre le point de contact le plus extérieur et le point de contact le plus intérieur.

4. Dispositif de transport selon l'une quelconque des revendications précédentes, **caractérisé par** un système de mesure (19) pour détecter la position de l'unité de transport (5) avec au moins une première partie de mesure fixe (21) et une deuxième partie de mesure (22) correspondant à la première partie de mesure (21) sur l'unité de transport (5).

5. Dispositif de transport selon la revendication 4, **caractérisé en ce que** la deuxième partie de mesure (22) est réalisée sur un côté du corps de base (11) de l'unité de transport (5) tourné vers le plan de moteur (17).

6. Dispositif de transport selon la revendication 4, **caractérisé en ce que** l'unité de transport (5) s'étend en forme de U sur l'unité de stator (3), le corps de base (11) formant une branche en regard de laquelle est disposée une branche supplémentaire (13) sur l'autre côté de l'unité de stator (3), et la deuxième partie de mesure (22) étant réalisée ou fixée sur la branche supplémentaire (13).

7. Dispositif de transport selon l'une quelconque des revendications 4 à 6, **caractérisé en ce que** le rail de guidage forme une trajectoire courbe, la trajectoire courbe se composant au moins d'une section courbe et éventuellement au moins d'une section droite, les sections courbes étant définies par des rayons ayant à chaque fois un centre, un axe neutre s'étendant à travers chaque centre perpendiculairement au plan de guidage,
- le rail de guidage (4) présentant un premier espacement (32) par rapport à l'axe neutre (20),
- le système de mesure (19) présentant un deuxième espacement (33) par rapport à l'axe neutre (20),
- l'au moins un élément magnétique (15) présentant un troisième espacement (45) par rapport à l'axe neutre (20),
- le deuxième espacement (33) s'écartant du premier espacement (32) d'au maximum 20 %, de préférence d'au maximum 15 %, et
- le premier espacement (32) s'écartant en particulier du troisième espacement (45) d'au maximum 20 %, de préférence d'au maximum 15 %.

8. Dispositif de transport selon l'une quelconque des revendications 4 à 7, **caractérisé en ce qu'**un plan de mesure vertical (18) est défini parallèlement à la direction de déplacement (8) et à travers le centre du système de mesure (19), le plan de mesure (18) étant situé, par rapport au plan de guidage (16), du même côté que le plan de moteur (17).

9. Dispositif de transport selon l'une quelconque des revendications précédentes, **caractérisé en ce que** l'unité de transport (5), dans l'état non sollicité, présente un premier centre de masse (23), et lors du transport d'un produit (14), présente un deuxième centre de masse (24), le deuxième centre de masse (24) étant situé plus près du plan de moteur (17) que le premier centre de masse (23).

10. Dispositif de transport selon l'une quelconque des revendications précédentes, **caractérisé en ce que** l'unité de transport (5) comprend un logement (31) pour porter un produit (14) ou un dispositif d'entraînement (7) pour faire glisser un produit (14), de préférence le logement (31) ou le dispositif d'entraînement (7) et le plan de guidage (16) étant réalisés sur des côtés différents du plan de moteur (17).

11. Dispositif de transport selon l'une quelconque des revendications précédentes, **caractérisé en ce que** l'unité de transport (5) est réalisée en forme de U en section transversale définie perpendiculairement à la direction de déplacement (8), les branches de la forme en U ayant des longueurs différentes.

12. Dispositif de transport selon l'une quelconque des revendications précédentes, **caractérisé en ce que** les éléments d'appui (6) et le rail de guidage (4) présentent une surface de contact en forme de V.

13. Agencement comprenant un dispositif de transport (1) selon l'une quelconque des revendications précédentes et une installation de remplissage ou une installation d'emballage.
